# EUROPEAN PATENT APPLICATION

(11) **EP 3 473 463 A1**
(43) Date of publication of application: **24.04.2019**
(21) Application number: 17818956.9
(22) Date of filing: 11.05.2017
(51) Int. Cl.: B60K 6/36, B60K 17/08

(54) **POWER DRIVE SYSTEM AND VEHICLE**

(30) Priority: 29.06.2016 CN 201620669761 U
(71) Applicant: BYD Company Limited, Shenzhen, Guangdong 518118 (CN)
(72) Inventor: LIU, Jing, Shenzhen Guangdong 518118 (CN); HUA, Yu, Shenzhen Guangdong 518118 (CN); CHAI, Lingdao, Shenzhen Guangdong 518118 (CN)
(74) Representative: Hoffmann Eitle
(86) International application number: PCT/CN2017/084024
(87) International publication number: WO 2018/000959

(57) **Abstract**

The present disclosure discloses a power drive system and a vehicle. The power drive system has seven forward gears, and includes: an engine configured to selectively engage at least one of a plurality of input shafts; a plurality of output shafts, the input shafts and the output shafts being driven by gear pairs, and a reverse output gear and a reverse-gear synchronizer being arranged on one of the output shafts; a reverse shaft, the reverse shaft linking with one of the input shafts and the reverse output gear; a motor power shaft, a motor-power-shaft first gear, a motor-power-shaft second gear and a motor power shaft synchronizer located therebetween being idly mounted on the motor power shaft, and the motor-power-shaft second gear linking with one of gear driven gears; and a first motor generator, the first motor generator linking with the motor power shaft.

## Description

### FIELD

The present disclosure relates to the technical field of automobiles, and in particular, to a power drive system and a vehicle.

### BACKGROUND

With the continuous consumption of energy, the development and utilization of new energy vehicles have gradually become a trend. As one of the new energy vehicles, hybrid vehicles are driven by engines and/or motors, have multiple drive modes, and thus can improve the transmission efficiency and the fuel economy.

However, in the related technologies known to the inventors, the transmission structure in the hybrid vehicle is complicated, the transmission modes are few, and the transmission efficiency is low. In addition, the transmissions in the conventional hybrid vehicles are mostly five or six gears, so the transmission efficiency is low.

### SUMMARY

The present disclosure aims at resolving one of the above technical problems in the prior art to some extent. To this end, one objective of the present disclosure is to provide a power drive system, which is rich in transmission mode, has seven forward gears, and can better meet the requirements for power and torque when a vehicle is driven.

The other objective of the present disclosure is to provide a vehicle including the above-mentioned power drive system.

A power drive system according to an embodiment of the present disclosure has seven forward gears, and includes: an engine; a plurality of input shafts, the engine being configured to selectively engage at least one of the plurality of input shafts, and a gear driving gear being arranged on each of the input shafts; a plurality of output shafts, a gear driven gear being arranged on each of the output shafts, the plurality of gear driven gears correspondingly meshing with the plurality of gear driving gears, a reverse output gear being idly arranged on one of the plurality of output shafts and a reverse-gear synchronizer for engaging with the reverse output gear also being arranged on the output shaft; a reverse shaft, the reverse shaft being configured to link with one of the plurality of input shafts and the reverse output gear; a motor power shaft, a motor-power-shaft first gear and a motor-power-shaft second gear being idly arranged on the motor power shaft, and a motor power shaft synchronizer located between the motor-power-shaft first gear and the motor-power-shaft second gear being further arranged on the motor power shaft, where the motor-power-shaft second gear is configured to link with one of the gear driven gears; and a first motor generator, the first motor generator being configured to link with the motor power shaft.

The power drive system according to the embodiment of the present disclosure can realize a charging function when the vehicle is driven and parked, thereby enriching a charging mode, and solving the problems of single charging mode, low charging efficiency and the like of the conventional power transmission system at least to some extent. In short, the power drive system according to the embodiment of the present disclosure can realize two charging modes: a driving charging mode and a parking charging mode. Moreover, the power drive system according to the embodiment of the present disclosure has seven forward gears, such that power is transmitted more smoothly, the transmission efficiency is high, and seven different transmission speed ratios can better meet the requirements of a vehicle for power and torque under different road conditions.

Further, the power drive system according to the embodiment of the present disclosure may further have the following additional technical features:

According to some embodiments of the present disclosure, the plurality of input shafts includes: a first input shaft and a second input shaft, the second input shaft being sleeved on the first input shaft; the plurality of output shafts includes: a first output shaft and a second output shaft; a first-gear driving gear, a third- and fifth-gear driving gear and a seventh-gear driving gear are fixedly arranged on the first input shaft, and a second-gear driving gear and a fourth- and sixth-gear driving gear are fixedly arranged on the second input shaft; a first-gear driven gear, a second-gear driven gear, a third-gear driven gear and a fourth-gear driven gear are idly arranged on the first output shaft, and a fifth-gear driven gear, a sixth-gear driven gear and a seventh-gear driven gear are idly arranged on the second output shaft; a first- and third-gear synchronizer is arranged between the first-gear driven gear and the third-gear driven gear, a second- and fourth-gear synchronizer is arranged between the second-gear driven gear and the fourth-gear driven gear, a fifth- and seventh-gear synchronizer is arranged between the fifth-gear driven gear and the seventh-gear driven gear, and a sixth-gear synchronizer is arranged on one side of the sixth-gear driven gear.

According to some embodiments of the present disclosure, the reverse output gear is idly mounted on the second output shaft and adjacent to the sixth-gear driven gear, and the reverse output gear and the sixth-gear driven gear share the sixth-gear synchronizer, such that the sixth-gear synchronizer constitutes a reverse-gear synchronizer.

According to some embodiments of the present disclosure, a first-output-shaft output gear is fixedly arranged on the first output shaft, a second-output-shaft output gear is fixedly arranged on the second output shaft, and the first-output-shaft output gear, the second-output-shaft output gear and the motor-power-shaft first gear all mesh with a main reducer driven gear of the vehicle.

According to some embodiments of the present disclosure, the power drive system further includes: a dual clutch, the dual clutch having an input end, a first output end and a second output end, the engine being connected to the input end, the first output end being connected to the first input shaft, and the second output end being connected to the second input shaft.

According to some embodiments of the present disclosure, the motor-power-shaft second gear links with one of the first-gear driven gear, the second-gear driven gear, the third-gear driven gear and the fourth-gear driven gear.

According to some embodiments of the present disclosure, the reverse output gear shares a gear synchronizer with an adjacent gear driven gear, and the shared gear synchronizer constitutes a reverse-gear synchronizer.

According to some embodiments of the present disclosure, distances between the second-gear driving gear, the fourth- and sixth-gear driving gear, the third- and fifth-gear driving gear, the first-gear driving gear as well as the seventh-gear driving gear, and the engine increase progressively.

According to some embodiments of the present disclosure, the power drive system further includes: an intermediate shaft, an intermediate-shaft first gear and an intermediate-shaft second gear being fixedly arranged on the intermediate shaft, the intermediate-shaft first gear meshing with one of the gear driven gears, and the intermediate-shaft second gear meshing with the motor-power-shaft second gear.

A vehicle according to an embodiment of the present disclosure includes the power drive system in the above embodiments.

### BRIEF DESCRIPTION OF THE DRAWINGS

FIG. 1 is a schematic diagram of a power drive system according to an embodiment of the present disclosure;
FIG. 2 is a schematic diagram of a power drive system according to another embodiment of the present disclosure;
FIG. 3 is a schematic diagram of a power drive system according to a further embodiment of the present disclosure;
FIG. 4 is a schematic diagram of a power drive system according to a still further embodiment of the present disclosure;
FIG. 5 is a schematic diagram of a power drive system according to a still further embodiment of the present disclosure;
FIG. 6 is a schematic diagram of a power drive system according to a still further embodiment of the present disclosure; and
FIG. 7 is a schematic diagram of a power drive system according to a still further embodiment of the present disclosure.

### DETAILED DESCRIPTION

The embodiments of the present disclosure are described in detail below. Examples of the embodiments are illustrated in the accompanying drawings. Same or like reference numerals throughout the specification denote same or like components or components having same or like functions. The embodiments described below with reference to the accompanying drawings are exemplary, and are used for explaining rather than limiting the present disclosure.

In the description of the present disclosure, it should be understood that orientation or position relationships indicated by the terms such as "center", "longitudinal", "transverse", "length", "width", "thickness", "on", "below", "front", "rear", "left", "right", "vertical", "horizontal", "top", "bottom", "inside", "outside", "clockwise", and "counterclockwise" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present disclosure.

In addition, the terms such as "first" and "second" are used only for the purpose of description, and should not be understood as indicating or implying the relative importance or implicitly specifying the number of the indicated technical features. Therefore, a feature defined by "first" or "second" can explicitly or implicitly include one or more of said features. In the description of the present disclosure, "a plurality of' means at least two, e.g., two, three, etc., unless otherwise explicitly defined.

In the present disclosure, unless otherwise explicitly specified and defined, the terms "installed", "connected", "connection", "fixed" and the like should be generally understood, for example, the "connected" may be fixedly connected, detachably connected or integrated; may be mechanically connected, electrically connected, or mutual communication; may be directly connected, indirectly connected through a medium, or communication of interiors of two components or interaction of two components. Persons of ordinary skill in the art may understand the specific meanings of the foregoing terms in this application according to specific situations.

In the present invention, unless otherwise explicitly specified or defined, a first feature being "above" or "under" a second feature may include that the first and second features are in direct contact and may also include that the first and second features are not in direct contact but are in contact by means of another feature therebetween. In addition, the first feature being "over", "above" or "on the top of' a second feature may include that the first feature is over or above the second feature or merely indicates that the horizontal height of the first feature is higher than that of the second feature. The first feature being "underneath", "below" or "on the bottom of' a second feature may include that the first feature is underneath or below the second feature or merely indicates that the horizontal height of the first feature is lower than that of the second feature.

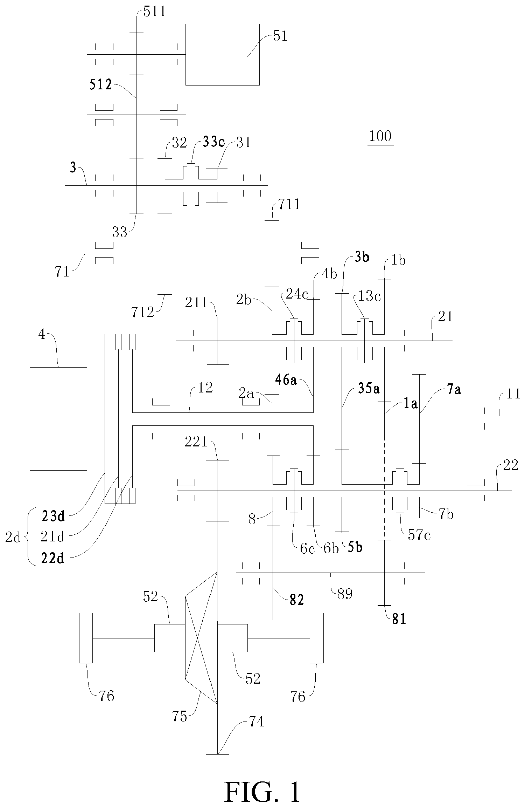

A power drive system 100 according to an embodiment of the present disclosure will be described in detail below in combination with FIG. 1 to FIG. 7. The power drive system 100 is suitable for use in a vehicle such as a hybrid vehicle, and serves as a power system of the vehicle to provide sufficient power and electric energy for the normal driving of the vehicle.

The power drive system 100 according to the embodiment of the present disclosure mainly includes two main parts: one may be a power source, the power source may be an engine 4, a motor generator, etc., and the other one may be a transmission (including a plurality of input shafts, a plurality of output shafts, gear pairs, etc.), the transmission being used to realize a speed change function on power output by the power source, and to meet the driving requirement or charging requirement of the vehicle.

For example, in some embodiments, as shown in FIG. 1 to FIG. 7, the power drive system 100 may include an engine 4, a first motor generator 51 and a transmission, but is not limited thereto.

As shown in FIG. 1, in some embodiments, the transmission primarily includes a plurality of input shafts (e.g., a first input shaft 11, a second input shaft 12), a plurality of output shafts (e.g., a first output shaft 21, a second output shaft 22), a motor power shaft 3, as well as relevant gears and gear shift elements (e.g., synchronizers) on the shafts.

The engine 4 is configured to selectively engage at least one of the plurality of input shafts when power is transmitted between the engine 4 and the input shafts. In other words, for example, when the engine 4 transmits power to the input shafts, the engine 4 can selectively engage with one of the plurality of input shafts to transmit power, or the engine 4 also can selectively simultaneously engage with two or more than two input shafts of the plurality of input shafts to transmit power.

For example, in the examples of FIG. 1 to FIG. 7, the plurality of input shafts may include two input shafts, i.e., a first input shaft 11 and a second input shaft 12, and the engine 4 can selectively engage with one of the first input shaft 11 and the second input shaft 12 to transmit power. Alternatively, in particular, the engine 4 also can simultaneously engage with the first input shaft 11 and the second input shaft 12 to transmit power. Of course, it should be understood that the engine 4 also can be disengaged from the first input shaft 11 and the second input shaft 12 at the same time.

For a person of ordinary skill in the art, the engagement state of the engine 4 with the input shafts is related to the specific operating condition of the power drive system 100, which will be described in more detail below in combination with specific embodiments, and is not described in detail herein.

Driving between the input shafts and the output shafts can be performed by gear pairs. For example, a gear driving gear is arranged on each input shaft, a gear driven gear is arranged on each output shaft, and the plurality of gear driven gears mesh with the plurality of gear driving gears correspondingly to form a plurality of gear pairs with different speed ratios.

In some embodiments of the present disclosure, the power drive system 100 may have seven forward gear pairs, i.e., have a first gear pair, a second gear pair, a third gear pair, a fourth gear pair, a fifth gear pair, a sixth gear pair and a seventh gear pair.

As shown in FIG. 1 to FIG. 7, a reverse output gear 8 is idly arranged on one of the output shafts, and a reverse-gear synchronizer (e.g., a sixth-gear synchronizer 6c) for engaging with the reverse output gear 8 is also arranged on the output shaft, in other words, the reverse-gear synchronizer can be used for engaging with the reverse output gear 8 and the output shaft, so that the output shaft and the reverse output gear 8 can rotate synchronously, and the reverse power can be output from the output shaft.

In some embodiments, as shown in FIG. 1 to FIG. 7, one reverse output gear 8 is provided, and the reverse output gear 8 may be idly mounted on the second output shaft 22, and the reverse-gear synchronizer may be a sixth-gear synchronizer 6c (i.e., a gear synchronizer).

A reverse shaft 89 is configured to link with one of the plurality of input shafts and the reverse output gear 8, for example, power on the one of the plurality of input shafts can be transmitted to the reverse output gear 8 through the reverse shaft 89, so that the reverse power can be output from the reverse output gear 8. In the examples of the present disclosure, the reverse output gear 8 is idly mounted on the second output shaft 22, and the reverse shaft 89 links with the first input shaft 11. Specifically, the reverse power output by the engine 4 can be output to the reverse output gear 8 after passing through the first input shaft 11 and the reverse shaft 89.

It should be noted that the above-mentioned "link" can be understood as associated movement of a plurality of components (e.g., two). Taking the linkage of two components as an example, when one of the components moves, the other component also moves accordingly.

For example, in some embodiments of the present disclosure, the linkage of a gear and a shaft can be understood as, when the gear rotates, the shaft linking therewith also rotates, or when the shaft rotates, the gear linking therewith also rotates.

For another example, the linkage of shafts can be understood as, when one of the shafts rotates, the other shaft linking therewith also rotates.

For a further example, the linkage of gears can be understood as, when one of the gears rotates, the other gear linking therewith also rotates.

In the following description of the present disclosure about "link", "link" is understood as the same if there is no specific instruction.

Further, as shown in FIG. 1 to FIG. 7, a gear 81 can be arranged on the reverse shaft 89, and the gear 81 can be in meshing drive with the gear driving gear on the one of the plurality of input shafts, for example, the gear 81 can be in direct meshing drive with a first-gear driving gear 1a on the input shaft 11, but is not limited thereto.

Further, a reverse intermediate gear 82 is further arranged on the reverse shaft 89. The reverse intermediate gear 82 is fixed to the reverse shaft 89, and the reverse intermediate gear 82 correspondingly meshes with the reverse output gear 8.

As shown in FIG. 1 to FIG. 7, the reverse output gear 8 is idly mounted on one of the plurality of output shafts, so if the reverse output gear 8 needs to output the reverse power with the output shaft on which the reverse output gear is idly mounted, a reverse-gear synchronizer (e.g., a sixth-gear synchronizer 6c) is needed to synchronize the reverse output gear 8 and the corresponding output shaft. As a preferred embodiment, the reverse output gear 8 shares a gear synchronizer with an adjacent gear driven gear (e.g., a sixth-gear driven gear 6b), in other words, for the gear driven gear arranged on the same output shaft as the reverse output gear 8, since the gear driven gear is idly mounted on the output shaft likewise and a gear synchronizer is required to engage the output shaft to output power, the reverse output gear 8 can be arranged adjacent to the gear driven gear to share the gear synchronizer with the gear driven gear, such that a coupling of the gear synchronizer can engage the reverse output gear 8 or the corresponding gear driven gear when moving axially to the left or right.

Thus, the number of synchronizers and the number of shifting yoke mechanisms can be reduced, so that the power drive system 100 is relatively smaller in axial and radial dimensions, more compact in structure and more convenient to control, and reduces the cost.

Of course, it could be appreciated that the reverse-gear synchronizer of the present disclosure may also be a separate synchronizer independent of the gear synchronizer.

A specific embodiment about the gear synchronizer constituting the reverse-gear synchronizer will be described in detail below with reference to the drawings, and is not described in detail herein.

The motor power shaft 3 will be described in detail below. As shown in FIG. 1 to FIG. 7, a motor-power-shaft first gear 31 and a motor-power-shaft second gear 32 are idly mounted on the motor power shaft 3. The motor-power-shaft first gear 31 can be in meshing drive with a main reducer driven gear 74.

The motor-power-shaft second gear 32 is configured to link with one of the gear driven gears. When a vehicle having the power drive system 100 according to the embodiment of the present disclosure is under some working conditions (the specific working conditions will be described in detail below in combination with specific embodiments), the power output by the power source can be transmitted between the motor-power-shaft second gear 32 and the gear driven gear linking therewith.

For example, in the examples of FIG. 1 to FIG. 4, the motor-power-shaft second gear 32 links with one of the first-gear driven gear 1b, the second-gear driven gear 2b, the third-gear driven gear 3b and the fourth-gear driven gear 4b respectively. Taking FIG. 1 as an example, the motor-power-shaft second gear 32 can directly mesh with the second-gear driven gear 2b or indirectly drive the second-gear driven gear 2b through an intermediate transmission component, which will be described in detail below in conjunction with specific embodiments.

Further, a motor power shaft synchronizer 33c is further arranged on the motor power shaft 3, the motor power shaft synchronizer 33c is located between the motor-power-shaft first gear 31 and the motor-power-shaft second gear 32, and the motor power shaft synchronizer 33c can selectively engage the motor-power-shaft first gear 31 or the motor-power-shaft second gear 32 with the motor power shaft 3. For example, in the example of FIG. 1, a coupling of the motor power shaft synchronizer 33c moves left to engage the motor-power-shaft second gear 32, and moves right to engage the motor-power-shaft first gear 31.

Similarly, the first motor generator 51 is configured to be capable of linking with the motor power shaft 3. For example, when the first motor generator 51 operates as a motor, generated power can be output to the motor power shaft 3. For another example, when the first motor generator 51 operates as a generator, power passing through the motor power shaft 3 can be output to the first motor generator 51, thereby driving the first motor generator 51 to generate power.

It should be noted here that in the description of the present disclosure about the "motor generator", the motor generator can be understood as a motor having generator and motor functions if there is no specific instruction.

As described above, the motor-power-shaft second gear 32 links with one of the gear driven gears. In particular, the first motor generator 51 can generate power using at least part of the power output by the engine 4 when the vehicle is driven and parked.

In other words, when the vehicle is in a driven state and the motor-power-shaft second gear 32 links with the gear driven gear, at least part of the power of the engine 4 can be output to the first motor generator 51 after passing through the gear driven gear, the motor-power-shaft second gear 32 and the motor power shaft 3, thereby driving the first motor generator 51 to generate power, and realizing a charging-while-driving operating condition of the engine 4.

In particular, when the vehicle is in a parked (the vehicle is stopped but the engine 4 is still in an operating state, e.g., the engine 4 is idle) state and the motor-power-shaft second gear 32 links with the gear driven gear, at least part of the power of the engine 4 can be output to the first motor generator 51 after passing through the gear driven gear, the motor-power-shaft second gear 32 and the motor power shaft 3, thereby driving the first motor generator 51 to generate power, realizing a parking charging function (i.e., "parking" charging), and greatly improving the charging efficiency and the fuel economy of the engine 4.

As for the motor-power-shaft first gear 31, since it meshes with the main reducer driven gear 74, the first motor generator 51 can engage the motor-power-shaft first gear 31 through the motor power shaft synchronizer 33c to directly output the generated power from the motor-power-shaft first gear 31, thereby shortening a transmission chain, reducing intermediate transmission components, and improving the transmission efficiency.

It should be noted that in the description of the present disclosure, the motor power shaft 3 may be the motor shaft of the first motor generator 51 per se. Of course, it can be understood that the motor shaft 3 and the motor shaft of the first motor generator 51 can also be two separate shafts.

Therefore, the power drive system 100 according to the embodiment of the present disclosure can realize a charging function when the vehicle is driven and parked, thereby enriching the charging mode, and solving the problems of single charging mode, low charging efficiency and the like of the conventional power transmission system at least to some extent. In short, the power drive system 100 according to the embodiment of the present disclosure can realize two charging modes: a driving charging mode and a parking charging mode. Moreover, the power drive system 100 according to the embodiment of the present disclosure has seven forward gears, such that the power is transmitted more smoothly, the transmission efficiency is high, and seven different transmission speed ratios can better meet the requirements of the vehicle for power and torque under different road conditions.

The specific structure of the power drive system 100 will be described in detail below with reference to FIG. 1 to FIG. 7.

First, a transmission mode of the motor power shaft 3 and the gear driven gear will be described in detail in combination with a specific embodiment.

In some embodiments of the present disclosure, as shown in FIG. 1 to FIG. 4, the power drive system 100 further includes an intermediate shaft 71, an intermediate-shaft first gear 711 and an intermediate-shaft second gear 712 being fixedly arranged on the intermediate shaft 71, the intermediate-shaft first gear 711 meshing with one of the gear driven gears (e.g., the second-gear driven gear 2b), and the intermediate-shaft second gear 712 meshing with the motor-power-shaft second gear 32. In short, in the embodiments, the motor-power-shaft second gear 32 links with one of the gear driven gears via the intermediate-shaft second gear 712 and the intermediate-shaft first gear 711.

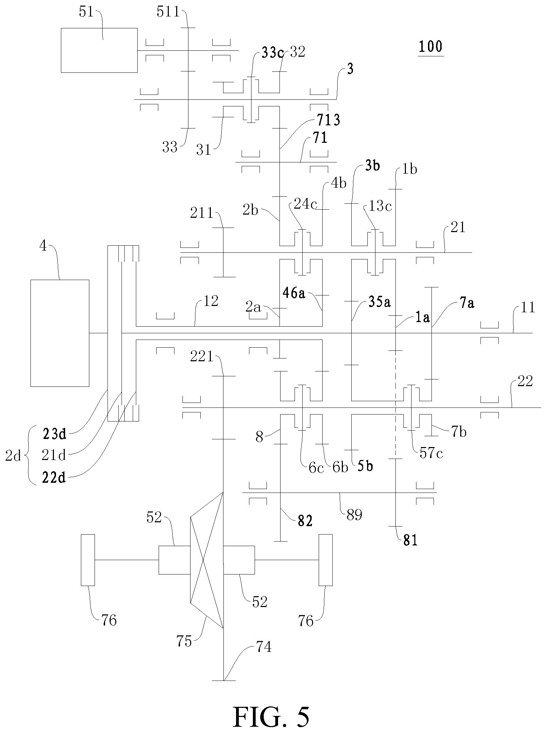

In other embodiments, as shown in FIG. 5, only an intermediate-shaft third gear 713 is fixedly arranged on the intermediate shaft 71, and the motor-power-shaft second gear 32 drives one of the gear driven gears (e.g., the second-gear driven gear 2b) via the intermediate-shaft third gear 713.

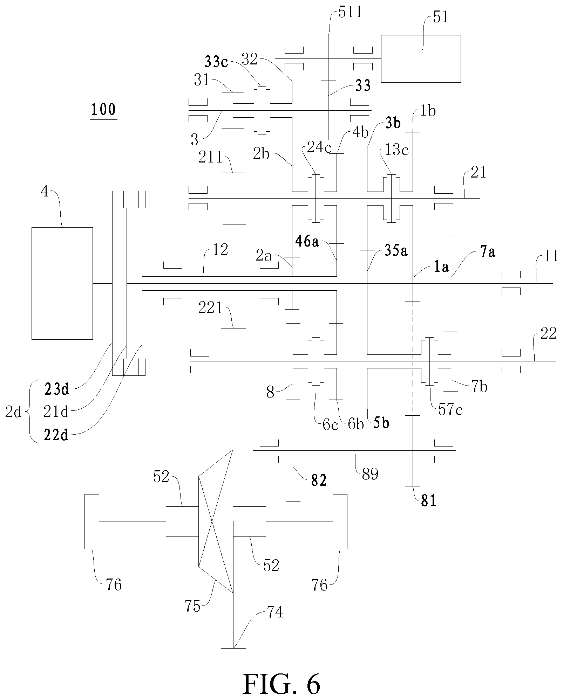

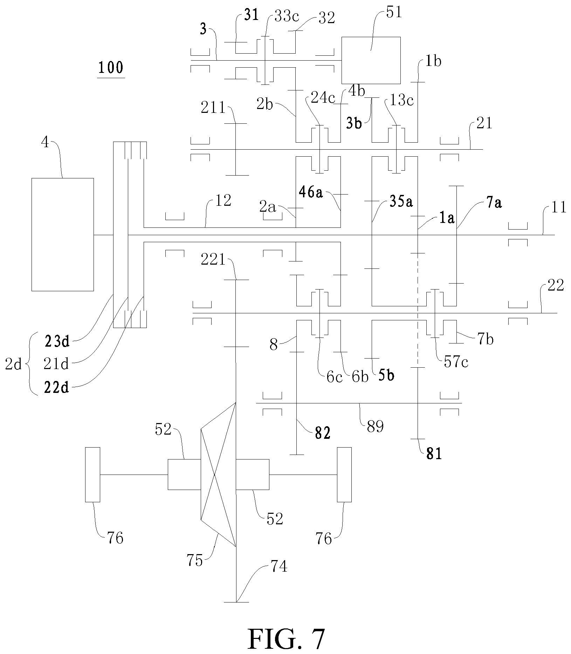

In still other embodiments, as shown in FIG. 6 and FIG. 7, the motor-power-shaft second gear 32 is in direct meshing drive with one of the gear driven gears (e.g., the second-gear driven gear 2b).

Next, a transmission mode of the motor power shaft 3 and the first motor generator 51 will be described in detail in combination with a specific embodiment.

In some embodiments, as shown in FIG. 1 to FIG. 6, a motor-power-shaft third gear 33 is further fixedly arranged on the motor power shaft 3, and the first motor generator 51 is configured to directly mesh with and drive or indirectly drive the motor-power-shaft third gear 33.

Further, as shown in FIG. 1 to FIG. 4, a first motor gear 511 is arranged on the motor shaft of the first motor generator 51, and the first motor gear 511 drives the motor-power-shaft third gear 33 via an intermediate gear 512. For another example, in the example of FIG. 5 and FIG. 6, a first motor gear 511 is arranged on the motor shaft of the first motor generator 51, and the first motor gear 511 directly meshes with the motor-power-shaft third gear 33. As another example, in the example of FIG. 7, the first motor generator 51 may also be coaxially connected with the motor power shaft 3.

The input shafts, the output shafts and the gears will be described in detail below in conjunction with the embodiments of FIG. 1 to FIG. 7.

In some embodiments of the present disclosure, as shown in FIG. 1 to FIG. 7, the plurality of input shafts may be two, that is, the plurality of input shafts includes a first input shaft 11 and a second input shaft 12, the second input shaft 12 may be a hollow shaft, the first input shaft 11 may be a solid shaft, part of the first input shaft 11 may be embedded into the hollow second input shaft 12, the other part of the first input shaft 11 may extend axially outward from the inside of the second input shaft 12, and the first input shaft 11 and the second input shaft 12 may be arranged coaxially.

The plurality of output shafts may be two, that is, a first output shaft 21 and a second output shaft 22, the first output shaft 21 and the second output shaft 22 are arranged in parallel to the plurality of input shafts, and both the first output shaft 21 and the second output shaft 22 may be solid shafts.

The power drive system 100 according to an embodiment of the present disclosure may have seven forward gears, specifically, odd gear driving gears may be arranged on one of the input shafts such as the first input shaft 11, and even gear driving gears may be arranged on the other input shaft such as the second input shaft 12, so that the first input shaft 11 takes charge of power transmission of the odd gear pairs and the second input shaft 12 takes charge of power transmission of the even gear pairs. In addition, as a preferred embodiment, among the plurality of gear driving gears, at least one of the gear driving gears is in meshing drive with two gear driven gears respectively, that is, at least one gear driving gear is shared by two gear driven gears, so that the number of gear driving gears can be reduced, the axial dimension of the power drive system is reduced, and the arrangement is facilitated.

More specifically, as shown in FIG. 1 to FIG. 7, a first-gear driving gear 1a, a third- and fifth-gear driving gear 35a and a seventh-gear driving gear 7a may be arranged on the first input shaft 11, a second-gear driving gear 2a and a fourth- and sixth-gear driving gear 46a may be arranged on the second input shaft 12, and each gear driving gear rotates synchronously along with the corresponding input shaft.

Correspondingly, as shown in FIG. 1 to FIG. 7, a first-gear driven gear 1b, a second-gear driven gear 2b, a third-gear driven gear 3b and a fourth-gear driven gear 4b are arranged on the first output shaft 21, a fifth-gear driven gear 5b, a sixth-gear driven gear 6b and a seventh-gear driven gear 7b are arranged on the second output shaft 22, and each gear driven gear is idly mounted on the corresponding output shaft, that is, each gear driven gear can rotate differentially relative to the corresponding output shaft.

The first-gear driven gear 1b meshes with the first-gear driving gear 1a to constitute a first gear pair, the second-gear driven gear 2b meshes with the second-gear driving gear 2a to constitute a second gear pair, the third-gear driven gear 3b meshes with the third- and fifth-gear driving gear 35a to constitute a third gear pair, the fourth-gear driven gear 4b meshes with the fourth- and sixth-gear driving gear 46a to constitute a fourth gear pair, the fifth-gear driven gear 5b meshes with the third- and fifth-gear driving gear 35a to constitute a fifth gear pair, the sixth-gear driven gear 6b meshes with the fourth- and sixth-gear driving gear 46a to constitute a sixth gear pair, and the seventh-gear driven gear 7b meshes with the seventh-gear driving gear 7a to constitute a seventh gear pair.

The fourth gear pair and the sixth gear pair share the fourth- and sixth-gear driving gear 46a, and the third gear pair and the fifth gear pair share the third- and fifth-gear driving gear 35a, so that two gear driving gears can be reduced, and the power drive system 100 is more compact in structure and smaller in axial dimension.

Since the driven gears and the output shafts are of idle sleeve structures, synchronizers are needed to synchronize the corresponding driven gears and output shafts to output the power.

In some embodiments, as shown in FIG. 1 to FIG. 7, the power drive system 100 includes a first- and third-gear synchronizer 13c, a second- and fourth-gear synchronizer 24c, a fifth- and seventh-gear synchronizer 57c and a sixth-gear synchronizer 6c.

As shown in FIG. 1, the first- and third-gear synchronizer 13c is arranged on the first output shaft 21 and located between the first-gear driven gear 1b and the third-gear driven gear 3b, and the first- and third-gear synchronizer 13c can engage the first-gear driven gear 1b or the third-gear driven gear 3b with the first output shaft 21, so that the driven gear and the output shaft can rotate synchronously.

For example, as shown in FIG. 1, a coupling of the first- and third-gear synchronizer 13c moves left to engage the third-gear driven gear 3b with the first output shaft 21, so that the third-gear driven gear 3b and the first output shaft 21 can rotate synchronously. The coupling of the first- and third-gear synchronizer 13c moves right to engage the first-gear driven gear 1b with the first output shaft 21, so that the first-gear driven gear 1b and the first output shaft 21 can rotate synchronously.

As shown in FIG. 1, similarly, the second- and fourth-gear synchronizer 24c is arranged on the first output shaft 21 and located between the second-gear driven gear 2b and the fourth-gear driven gear 4b, and the second and fourth speed synchronizer 24c can engage the second-gear driven gear 2b or the fourth-gear driven gear 4b with the first output shaft 21, so that the driven gear and the output shaft can rotate synchronously.

For example, as shown in FIG. 1, a coupling of the second- and fourth-gear synchronizer 24c moves left to engage the second-gear driven gear 2b with the first output shaft 21, so that the second-gear driven gear 2b and the first output shaft 21 rotate synchronously. The coupling of the second- and fourth-gear synchronizer 24c moves right to engage the fourth-gear driven gear 4b with the first output shaft 21, so that the fourth-gear driven gear 4b and the first output shaft 21 rotate synchronously.

As shown in FIG. 1, similarly, the fifth- and seventh-gear synchronizer 57c is arranged on the second output shaft 22, and the fifth- and seventh-gear synchronizer 57c is located between the fifth-gear driven gear 5b and the seventh-gear driven gear 7b. The fifth- and seventh-gear synchronizer 57c is used for engaging the fifth-gear driven gear 5b or the seventh-gear driven gear 7b with the second output shaft 22, for example, a coupling of the fifth- and seventh-gear synchronizer 57c moves right to engage the seventh-gear driven gear 7b with the second output shaft 22, so that the seventh-gear driven gear 7b and the second output shaft 22 rotate synchronously. For another example, the coupling of the fifth- and seventh-gear synchronizer 57c moves left to engage the fifth-gear driven gear 5b with the second output shaft 22, so that the fifth-gear driven gear 5b and the second output shaft 22 rotate synchronously.

As shown in FIG. 1, similarly, the sixth-gear synchronizer 6c is arranged on the second output shaft 22, and the sixth-gear synchronizer 6c is located on one side, for example the left side, of the sixth-gear driven gear 6b. The sixth-gear synchronizer 6c is used for engaging the sixth-gear driven gear 6b with the second output shaft 22, for example, a coupling of the sixth-gear synchronizer 6c moves right to engage the sixth-gear driven gear 6b with the second output shaft 22, so that the sixth-gear driven gear 6b and the second output shaft 22 rotate synchronously.

As shown in FIG. 1 to FIG. 7, the reverse output gear 8 is arranged adjacent to the sixth-gear driven gear 6b to share the sixth-gear synchronizer 6c, so that the sixth-gear synchronizer 6c constitutes a reverse-gear synchronizer. As shown in FIG. 1 to FIG. 7, the coupling of the sixth-gear synchronizer 6c moves left to engage the reverse output gear 8, and moves right to engage the sixth-gear driven gear 6b.

In some embodiments, as shown in FIG. 1, distances between the second-speed driving gear 2a, the fourth- and sixth-gear driving gear 46a, the third- and fifth-gear driving gear 35a, the first-gear driving gear 1a, the seventh-gear driving gear 7a and the engine 4 increase progressively. Thus, the gear arrangement is more rational, and the power drive system 100 is more compact and smaller in radial and axial dimensions.

In some embodiments of the present disclosure, the engine 4 can transmit power to or be separated from the first input shaft 11 and the second input shaft 12 of the transmission by a dual clutch 2d.

Referring to FIG. 1 to FIG. 7, the dual clutch 2d has an input end 23d, a first output end 21d and a second output end 22d. The engine 4 is connected to the input end 23d of the dual clutch 2d. Specifically, the engine 4 can be connected to the input end 23d of the dual clutch 2d in multiple forms, e.g., through a flywheel, a shock absorber or a torsion disc, etc.

The first output end 21d of the dual clutch 2d is connected to the first input shaft 11, such that the first output end 21d rotates synchronously with the first input shaft 11. The second output end 22d of the dual clutch 2d is connected to the second input shaft 12, such that the second output end 22d rotates synchronously with the second input shaft 12.

The input end 23d of the dual clutch 2d may be a shell of the dual clutch 2d, and the first output end 21d and the second output end 22d may be two driven discs. Generally, the shell can be disengaged from the two driven discs, that is, the input end 23d is disengaged from both the first output end 21d and the second output end 22d. When one of the driven discs needs to be engaged, the shell can be controlled to engage the corresponding driven disc to rotate synchronously, that is, the input end 23d engages with one of the first output end 21d and the second output end 22d, so that the power transmitted from the input end 23d can be output via one of the first output end 21d and the second output end 22d.

In particular, the shell also can simultaneously engage with the two driven discs, that is, the input end 23d also can simultaneously engage with the first output end 21d and the second output end 22d, so that the power transmitted from the input end 23d can be output simultaneously via the first output end 21d and the second output end 22d.

It should be understood that the specific engagement state of the dual clutch 2d is affected by the control policy. For a person skilled in the art, the control policy can be adaptively set according to the actual required transmission mode, so that the dual clutch 2d can be switched in multiple modes that the input end 23d is disengaged from the two output ends and the input end 23d is engaged with at least one of the two output ends.

The connection relationship between the three power output shafts (i.e., the first output shaft 21, the second output shaft 22 and the motor power shaft 3) and a differential 75 of the vehicle will be described in detail below with reference to FIG. 1 to FIG. 7.

The differential 75 of the vehicle may be arranged between a pair of front wheels 76 or between a pair of rear wheels. In some examples of the present disclosure, the differential 75 is located between a pair of front wheels 76. The function of the differential 75 is to cause left and right driving wheels to roll at different angular velocities when the vehicle is turned or driven or on an uneven road, so as to ensure a pure rolling motion between the driving wheels on two sides and the ground. A main reducer driven gear 74 is provided on the differential 75, for example, the main reducer driven gear 74 may be arranged on a shell of the differential 75. The main reducer driven gear 74 may be a bevel gear, but is not limited thereto.

Further, a first-output-shaft output gear 211 is fixedly arranged on the first output shaft 21, the first-output-shaft output gear 211 rotates synchronously with the first output shaft 21, and the first-output-shaft output gear 211 is in meshing drive with the main reducer driven gear 74, so that power passing through the first output shaft 21 can be transmitted from the first-output-shaft output gear 211 to the main reducer driven gear 74 and the differential 75.

Similarly, a second-output-shaft output gear 221 is fixedly arranged on the second output shaft 22, the second-output-shaft output gear 221 rotates synchronously with the second output shaft 22, and the second-output-shaft output gear 221 is in meshing drive with the main reducer driven gear 74, so that power passing through the second output shaft 22 can be transmitted from the second-output-shaft output gear 221 to the main reducer driven gear 74 and the differential 75.

Similarly, the motor-power-shaft first gear 31 can be used for outputting power passing through the motor power shaft 3, so the motor-power-shaft first gear 31 is also in meshing drive with the main reducer driven gear 74.

Some typical operating conditions of the power drive system 100 according to the embodiments of the present disclosure include a parking power generation mode, a charging-while-driving mode in case that the two output ends 21d and 22d of the dual clutch 2d are simultaneously engaged, and a reverse mode.

The parking power generation mode as a typical operating condition is described first. When the vehicle is in a parking state, the engine 4 is configured to output generated power to one of the gear driven gears linking with the motor-power-shaft second gear 32, and the motor power shaft synchronizer 33c synchronizes the motor-power-shaft second gear 32 such that the power is output to the first motor generator to drive the first motor generator to generate power.

Specifically, in conjunction with the embodiment shown in FIG. 1, the engine 4 can output power to the second input shaft 12 through the dual clutch 2d after the vehicle is parked, and the motor power shaft synchronizer 33c engages the motor-power-shaft second gear 32, so that the power passing through the second input shaft 12 can pass through the second gear pair, the intermediate-shaft first gear 711, the intermediate shaft 71, the intermediate-shaft second gear 712, the motor-power-shaft second gear 32, the motor power shaft synchronizer 33c, the motor power shaft 3, the motor-power-shaft third gear 33, the intermediate gear 512 and the first motor gear 511 and then is output to the first motor generator 51, thereby driving the first motor generator 51 to generate power as a generator.

Thus, a parking power generation function is realized, and the charging mode is enriched. The vehicle is in a stationary state under the parking power generation condition, and the power of the engine 4 all can be used for charging, so that the charging efficiency is improved, and a rapid power supply function is realized.

Second described is the charging-while-driving mode in case that the two output ends 21d and 22d of the dual clutch 2d are simultaneously engaged. Under this condition, the engine 4 can output, through simultaneous engagement of the input end 23d with the first output end 21d and the second output end 22d, part of power to the wheels via one of the output shafts as power for driving the vehicle, and output the other part of the power to the first motor generator 51 via the motor-power-shaft second gear 32 to drive the first motor generator 51 to generate power.

Specifically, in conjunction with the embodiment shown in FIG. 1, the motor power shaft synchronizer 33c engages the motor-power-shaft second gear 32 under this condition, part of the power of the engine 4 can be output to the first input shaft 11 and then output via the first gear pair, the third gear pair, the fifth gear pair or the seventh gear pair, and the other part of the power of the engine 4 can be output to the first motor generator 51 after passing through the second input shaft 12, the second gear pair and the motor-power-shaft second gear 32, so as to drive the first motor generator 51 to generate power.

In the conventional power transmission system having the dual clutch 2d, the dual clutch 2d has only one clutch in an operating state at the same time, whereas the power drive system 100 according to the embodiments of the present disclosure achieves a breakthrough application of the dual clutch 2d, that is, in the state that the two clutches of the dual clutch 2d are both in an engaged state (the input end 23d simultaneously engages the first output end 21d and the second output end 22d), part of the power of the engine 4 is output by an output shaft (e.g., the first output shaft 21 or the second output shaft 22) to drive the vehicle, and the other part of the power is output to the first motor generator 51 to drive the motor to generate power, thereby enriching the transmission mode, and meeting the driving and charging requirements of the vehicle.

Next, the reverse mode is described. In particular, the power drive system 100 according to the embodiments of the present disclosure has three reverse modes: a mechanical reverse mode, an electric reverse mode and a hybrid reverse mode.

The mechanical reverse mode is to realize the reverse function of the vehicle by using the power of the engine 4. When the vehicle is in the mechanical reverse mode, the power generated by the engine 4 as a power source is output to the reverse shaft 89, and is synchronized to a reverse output gear 8 by a reverse-gear synchronizer, such that the power generated by the engine 4 is output from the reverse output gear 8.

Specifically, in conjunction with the embodiment shown in FIG. 1, the sixth-gear synchronizer 6c engages the reverse output gear 8, so that the power generated by the engine 4 passes through the first input shaft 11 and the reverse shaft 89 and then is output to the reverse output gear 8. In this way, the reverse power can be finally output from the second output shaft 22 by the engagement of the reverse-gear synchronizer 6c.

In short, when the vehicle is in the mechanical reverse mode, as shown in FIG. 1, only the reverse-gear synchronizer 6c engages the reverse output gear 8.

The electric reverse mode is to realize the reverse function of the vehicle by using the first motor generator 51. When the vehicle is in the electric reverse mode, the first motor generator 51 serves as a power source, and the motor power shaft synchronizer 33c synchronizes the motor-power-shaft first gear 31, such that the power generated by the first motor generator 51 is output from the motor-power-shaft first gear 31 to realize reversing.

Specifically, in conjunction with the embodiment of FIG. 1, the motor power shaft synchronizer 33c engages the motor-power-shaft first gear 31, and the power output by the first motor generator 51 passes through the first motor gear 511, the intermediate gear 512, the motor-power-shaft third gear 33, the motor power shaft 3 and the motor power shaft synchronizer 33c and then is output from the motor-power-shaft first gear 31.

In this case, the transmission chain is short, the intermediate transmission components are few, the reverse efficiency is high, and it can be considered as a direct reverse path of the first motor generator 51.

In short, in the electric reverse mode, only the motor power shaft synchronizer 33c engages the motor-power-shaft first gear 31.

The hybrid reverse mode is to realize the reverse function of the vehicle by using the engine 4 and the first motor generator 51 at the same time, and the hybrid reverse mode is a combination of the above-mentioned mechanical reverse mode and the electric reverse mode.

When the vehicle is in the hybrid reverse mode, the power generated by the engine 4 as a power source is output to the reverse shaft 89, and the reverse output gear 8 is synchronized by the reverse-gear synchronizer, such that the power generated by the engine 4 is output from the reverse output gear 8.

At the same time, the first motor generator 51 serves as a power source, and the motor power shaft synchronizer 33c synchronizes the motor-power-shaft first gear 31, such that the power generated by the first motor generator 51 is output from the motor-power-shaft first gear 31.

Specifically, as shown in FIG. 1, when the power drive system 100 is in the hybrid reverse mode, the above-mentioned mechanical reverse mode and electric reverse mode are combined, the engine 4 outputs power from the reverse output gear 8 in accordance with the mechanical reverse mode, the first motor generator 51 outputs power from the motor-power-shaft first gear 31 in accordance with the electric reverse mode, and the two parts of power are coupled at the main reducer driven gear 74 and then output to the wheels together to realize hybrid reversing.

At this time, the first motor generator 51 can adjust the speed, so that the main reducer driven gear 74 can synchronously receive the power from the engine 4 and the first motor generator 51 in a balanced manner, and the smoothness and coordination of the transmission are improved.

In short, in the hybrid mode, as shown in FIG. 1, the motor power shaft synchronizer 33c engages the motor-power-shaft first gear 31 and the reverse-gear synchronizer 6c engages the reverse output gear 8.

Accordingly, the power drive system 100 can implement three reverse modes, namely, the mechanical reverse mode, the electric reverse mode and the hybrid reverse mode, which enrich the reverse condition, and can be flexibly switched according to the actual condition to meet the driving requirements.

For example, when the carrying capacity of a battery of the vehicle is sufficient, the electric reverse mode can be used, so that not only does harmful gas not be discharged during reversing, but also the energy consumption can be reduced. Especially for a novice driver to reverse the vehicle, the vehicle may be reversed to a designated position by multiple times of operation. The engine 4 generates more harmful gas in case of reversing at a low speed, and the engine 4 is generally in a non-economical rotation speed region during reversing, so the fuel consumption is relatively high. The electric reverse mode used at this time can solve this problem well, not only can the emission be reduced, but also the energy consumption is low while the motor is used as power to implement low-speed reversing, and the fuel economy of the engine 4 is improved to a certain extent.

For another example, when the carrying capacity of the battery of the vehicle is insufficient or low, the mechanical reverse mode can be used. For a further example, when quick reversing or high-power reversing or the like is needed, the hybrid reverse mode can be used to increase the power of the vehicle and facilitate reversing.

Of course, the above descriptions of application environments of the three reverse modes are merely illustrative, and cannot be understood as limiting or suggesting the present disclosure that the corresponding reverse mode must be used when the vehicle is in the above environments. It will be apparent to those skilled in the art that the reverse mode required in the corresponding reverse environment can be specifically set according to needs or actual conditions.

Hence, the reverse mode of the power drive system 100 is further enriched, more choices are provided for the driver, the driving pleasure is fully improved, and the reverse requirements of different road conditions are better met.

According to the power drive system 100 in some embodiments of the present disclosure, as shown in FIG. 1 to FIG. 7, a second motor generator 52 may be added to increase the power of the power drive system 100 and enrich the transmission mode.

For example, in some of the embodiments, the second motor generator 52 can drive the main reducer driven gear 74. For example, a gear can be arranged on the motor shaft of the second motor generator 52, and the gear is in direct meshing drive with the main reducer driven gear 74. For another example, in other embodiments, the second motor generator 52 may also be configured to connect with the first input shaft 11 or connect with the first output shaft 21. For another example, in still other embodiments, two second motor generators 52 are provided and arranged on two sides of the differential 75 respectively, for example, the two second motor generators 52 can be integrated with the differential 75. Alternatively, the aforementioned engine 4 and first motor generator 51 are used to drive the front wheels, and the second motor generator 52 may be a wheel rim motor and used for the rear wheels, or the second motor generator 52 may drive two rear wheels via one speed reduction mechanism, or two second motor generators 52 are provided and each drives one rear wheel via one speed reduction mechanism.

The structure and typical operating conditions of the power drive system 100 in specific embodiments will be briefly described with reference to FIG. 1 to FIG. 7.

### Embodiment 1

As shown in FIG. 1, the engine 4 is connected to the input end 23d of the dual clutch 2d, the first output end 21d of the dual clutch 2d is connected to the first input shaft 11, the second output end 22d of the dual clutch 2d is connected to the second input shaft 12, the input end 23d of the dual clutch 2d can be in a state of being simultaneously disengaged from the first output end 21d and the second output end 22d of the dual clutch 2d, or the input end 23d of the dual clutch 2d can engage with one of the first output end 21d and the second output end 22d of the dual clutch 2d, or the input end 23d of the dual clutch 2d can simultaneously engage with the first output end 21d and the second output end 22d of the dual clutch 2d.

The second input shaft 12 is of a hollow shaft structure, the first input shaft 11 is a solid shaft, the second input shaft 12 is coaxially sleeved on the first input shaft 11, and part of the first input shaft 11 extends axially outward from the inside of the second input shaft 12.

A first-gear driving gear 1a, a third- and fifth-gear driving gear 35a and a seventh-gear driving gear 7a which can rotate synchronously with the first input shaft 11 are arranged on the first input shaft 11, the first-gear driving gear 1a is located in the middle, the seventh-gear driving gear 7a is located on the right, and the third- and fifth-gear driving gear 35a is located on the left.

A second-gear driving gear 2a and a fourth- and sixth-gear driving gear 46a which can rotate synchronously with the second input shaft 12 are arranged on the second input shaft 12, the second-gear driving gear 2a is located on the left, and the fourth- and sixth-gear driving gear 46a is located on the right.

The first output shaft 21 is arranged in parallel to the two input shafts. A first-gear driven gear 1b, a second-gear driven gear 2b, a third-gear driven gear 3b and a fourth-gear driven gear 4b are idly mounted on the first output shaft 21, the first-gear driven gear 1b directly meshes with the first-gear driving gear 1a, the second-gear driven gear 2b directly meshes with the second-gear driving gear 2a, the third-gear driven gear 3b directly meshes with the third- and fifth-gear driving gear 35a, and the fourth-gear driven gear 4b directly meshes with the fourth- and sixth-gear driving gear 46a.

A first- and third-gear synchronizer 13c and a second- and fourth-gear synchronizer 24c are further arranged on the first output shaft 21, the first- and third-gear synchronizer 13c is located between the first-gear driven gear 1b and the third-gear driven gear 3b, and may selectively synchronize the first-gear driven gear 1b or the third-gear driven gear 3b with the first output shaft 21, and the second- and fourth-gear synchronizer 24c is located between the second-gear driven gear 2b and the fourth-gear driven gear 4b and may selectively synchronizes the second-gear driven gear 2b or the fourth-gear driven gear 4b with the first output shaft 21.

The second output shaft 22 is also arranged in parallel to the two input shafts. A fifth-gear driven gear 5b, a sixth-gear driven gear 6b and a seventh-gear driven gear 7b are idly mounted on the second output shaft 22, the fifth-gear driven gear 5b directly meshes with the third- and fifth-gear driving gear 35a, the sixth-gear driven gear 6b meshes with the fourth- and sixth-gear driving gear 46a, and the seventh-gear driven gear 7b meshes with the seventh-gear driving gear 7a. A fifth- and seventh-gear synchronizer 57c and a sixth-gear synchronizer 6c are further arranged on the second output shaft 22, the fifth- and seventh-gear synchronizer 57c is used for synchronizing the fifth-gear driven gear 5b or the seventh-gear driven gear 7b with the second output shaft 22, and the sixth-gear synchronizer 6c is used for engaging with the sixth-gear driven gear 6b or the reverse output gear 8 idly mounted on the second output shaft 22, that is, the sixth-gear synchronizer 6c constitutes a reverse-gear synchronizer.

A gear 81 and a reverse intermediate gear 82 are fixedly arranged on the reverse shaft 89, the reverse intermediate gear 82 meshes with the reverse output gear 8, and the gear 81 meshes with the first-gear driving gear 1a.

A first-output-shaft output gear 211 meshing with the main reducer driven gear 74 is fixedly arranged on the first output shaft 21, and a second-output-shaft output gear 211 meshing with the main reducer driven gear 74 is fixedly arranged on the second output shaft 22.

The motor power shaft 3 is arranged in parallel to the two input shafts and the two output shafts, a motor-power-shaft first gear 31 and a motor-power-shaft second gear 32 are idly mounted on the motor power shaft 3, a motor power shaft synchronizer 33c between the motor-power-shaft first gear 31 and the motor-power-shaft second gear 32 is further arranged on the motor power shaft 3, and the motor power shaft synchronizer 33c may selectively engage one of the motor-power-shaft first gear 31 and the motor-power-shaft second gear 32.

The motor-power-shaft first gear 31 meshes with the main reducer driven gear 74, the motor-power-shaft second gear 32 meshes with the intermediate-shaft second gear 712, the intermediate-shaft second gear 712 and the intermediate-shaft first gear 711 are fixed on the intermediate shaft 71, and the intermediate-shaft first gear 711 meshes with the second-gear driven gear 2b.

A first motor gear 511 is arranged on the motor shaft of the first motor generator 51, and the first motor gear 511 meshes with a motor-power-shaft third gear 33 fixedly arranged on the motor power shaft 3 via an intermediate gear 512.

The typical operating conditions of the power drive system 100 shown in FIG. 1 will be described in detail below.

### Parking charging condition:

The input end 23d of the dual clutch 2d engages the second output end 22d and is disengaged from the first output end 21d, the motor power shaft synchronizer 33c engages the motor-power-shaft second gear 32, and the power output by the engine 4 sequentially passes through the input end 23d of the dual clutch 2d, the second output end 22d, the second input shaft 12, the second gear pair, the intermediate shaft 71, the motor-power-shaft second gear 32 and the motor power shaft 3 and then is output to the first motor generator 51, thereby driving the first motor generator 51 to generate power.

Under this condition, constant speed ratio charging can be realized, and the energy transfer efficiency is higher. The selection of the speed ratio is directly related to the rotational speed of the engine 4 during parking, the model selection of the first motor generator 51, and the maximum rotational speed allowed by additional parts such as peripheral bearings. For a person of ordinary skill in the art, the above factors and the like can be considered comprehensively to flexibly design the corresponding transmission speed ratio, so that the power drive system 100 can furthest use the energy of the engine 4 during parking power generation to achieve the purpose of fast charging. In short, when the power of the engine 4 is transmitted through a path including the second input shaft 12, the second gear pair, the motor-power-shaft second gear 32 and the motor power shaft 3, the purpose of optimal constant speed ratio charging can be achieved, and the charging efficiency and the fuel economy of the engine 4 are improved.

### Pure electric condition:

When the power drive system 100 is in the pure electric condition, the motor power shaft synchronizer 33c engages the motor-power-shaft first gear 31, so that the power generated by the first motor generator 51 can pass through the motor power shaft 3 and then be output from the motor-power-shaft first gear 31. The path has fewer intermediate transmission components and high transmission efficiency.

Of course, optionally, the motor power shaft synchronizer 33c also can engage the motor-power-shaft second gear 32, and the power generated by the first motor generator 51 can pass through the motor-power-shaft second gear 32 and the intermediate shaft 71 and then be output from the second-gear driven gear 2b or the fourth-gear driven gear 4b.

In summary, when the power drive system 100 is in the pure electric condition, the first motor generator 51 can output power to the wheels through the plurality of paths having different speed ratios, thereby driving the vehicle. In short, in the case of starting, rapid acceleration, climbing, normal speed driving, etc. by the first motor generator 51, different optimal speed ratios can be selected respectively, so that the first motor generator 51 has the highest operating efficiency.

### Hybrid operating condition scheme 1 of gears:

Under this scheme, the motor power shaft synchronizer 33c can engage the motor-power-shaft first gear 31, so that the power generated by the first motor generator 51 can pass through the motor power shaft 3 and then be output from the motor-power-shaft first gear 31.

The engine 4 can output power through any of the forward gear pairs, and the two parts of power are coupled at the main reducer driven gear 74 and then output together.

Under the hybrid gear condition, the first motor generator 51 can adjust the speed, so that the main reducer driven gear 74 can synchronously receive the power from the engine 4 and the first motor generator 51 in a balanced manner, and the smoothness and coordination of the transmission are improved.

### Hybrid operating condition scheme 2 of gears:

Under this scheme, the motor power shaft synchronizer 33c also can engage the motor-power-shaft second gear 32, and the power generated by the first motor generator 51 can pass through the motor-power-shaft second gear 32 and the intermediate shaft 71 and then be output to the second input shaft 12, so that the power of the first motor generator 51 can be output by the second gear pair or the fourth gear pair. At the same time, the engine 4 can output power through any of the forward gear pairs, and the power is coupled with the power output by the first motor generator 51 and then output to the wheels.

For example, when the engine 4 outputs power through the second or fourth gear pair, the first motor generator 51 can adjust the speed, so that the second input shaft 12 can synchronously receive the power from the engine 4 and the first motor generator 51 in a balanced manner, and the smoothness and coordination of the transmission are improved. For another example, when the engine 4 outputs power through the first or third gear pair, the first motor generator 51 can adjust the speed, so that the first output shaft 21 can synchronously receive the power from the engine 4 and the first motor generator 51 in a balanced manner, and the smoothness and coordination of the transmission are improved. Alternatively, when the engine 4 outputs power through the five gear pair or the seventh gear pair, the first motor generator 51 can adjust the speed, so that the main reducer driven gear 74 can synchronously receive the power from the engine 4 and the first motor generator 51 in a balanced manner, and the smoothness and coordination of the transmission are improved.

In summary, for a person of ordinary skill in the art, any hybrid path in any of the above-mentioned hybrid operating condition schemes 1 and 2 of gears can be flexibly selected according to actual needs, which greatly enriches the transmission mode of the power drive system 100, improves the driving pleasure, enables the vehicle to better adapt to different road conditions, and improves the power performance and fuel economy of the vehicle.

### Charging-while-driving operating condition scheme 1 of the engine:

Under this scheme, the motor power shaft synchronizer 33c can engage the motor-power-shaft first gear 31, the engine 4 can output power to drive the vehicle through any forward gear, and the first motor generator 51 can generate power through reverse drive of the wheels on the motor-power-shaft first gear 31.

### Charging-while-driving operating condition scheme 2 of the engine:

Under this scheme, the motor power shaft synchronizer 33c can engage the motor-power-shaft second gear 32, the engine 4 can output power through the even gear pair, for example, through the second gear pair, the fourth gear pair or the sixth gear pair, at the same time, the other part of the power generated by the engine 4 can be output to the first motor generator 51 through the second gear pair, the intermediate shaft 71 and the motor-power-shaft second gear 32, thereby driving the first motor generator 51 to generate power.

### Charging-while-driving operating condition scheme 3 of the engine:

In the above charging-while-driving operating condition schemes 1 and 2 of the engine, the dual clutch 2d has only one clutch engaged during the transmission, for example, the input end 23d thereof is engaged with the first output end 21d or the input end 23d is engaged with the second output end 22d. In particular, according to the power drive system 100 of the embodiment of the present disclosure, when the input end 23d of the dual clutch 2d simultaneously engages with the first output end 21d and the second output end 22d, the charging-while-driving operating condition also can be realized.

Under this scheme, the motor power shaft synchronizer 33c engages the motor-power-shaft second gear 32, the engine 4 can output a part of power to the second input shaft 12, and this part of power can pass through the second gear pair, the intermediate shaft 71 and the motor-power-shaft second gear 32 and then be output to the first motor generator 51, thereby driving the first motor generator 51 to generate power. At the same time, the engine 4 can output the other part of power to the first input shaft 11, and this part of power can be output through the first gear pair, the third gear pair, the fifth gear pair or the seventh gear pair.

In summary, for a person of ordinary skill in the art, any transmission path in the above-mentioned charging-while-driving operating condition schemes 1, 2 and 3 of the engine 4 can be flexibly selected according to actual needs, which greatly enriches the transmission modes of the power drive system 100, improves the driving pleasure, enables the vehicle to better adapt to different road conditions, and improves the power performance and fuel economy of the vehicle. Moreover, in some of the above-mentioned charging-while-driving operating conditions of the engine 4, when part of the power of the engine 4 is transmitted through a path including the second input shaft 12, the second gear pair, the intermediate shaft 71, the motor-power-shaft second gear 32 and the motor power shaft 3, the purpose of optimal constant speed ratio charging can be achieved, so that the charging efficiency and the fuel economy of the engine 4 are improved.

### Reverse operating condition:

When the power drive system 100 is in the mechanical reverse operating condition, the sixth-gear synchronizer 6c (i.e., the reverse-gear synchronizer 6c) engages the reverse output gear 8, and the power output by the engine 4 passes through the first input shaft 11, the reverse shaft 89 and the reverse output gear 8 and then is output from the second output shaft 22.

When the power drive system 100 is in the electric reverse mode, the motor power shaft synchronizer 33c engages the motor-power-shaft first gear 31, and the power generated by the first motor generator 51 passes through the motor power shaft 3 and the motor-power-shaft first gear 31 and then is output to the wheels.

When the power drive system 100 is in the hybrid reverse mode, the sixth-gear synchronizer 6c (i.e., the reverse-gear synchronizer 6c) engages the reverse output gear 8 and the motor power shaft synchronizer 33c engages the motor-power-shaft first gear 31, the engine 4 outputs reverse power from the second output shaft 22, the first motor generator 51 outputs power from the motor-power-shaft first gear 31, and the two parts of power are coupled at the main reducer driven gear 74 and then output together. At this time, the first motor generator 51 can adjust the speed, so that the main reducer driven gear 74 can synchronously receive the power from the engine 4 and the power from the first motor generator 51 in a balanced way, and the smoothness and coordination of the transmission are improved.

### Embodiment 2

As shown in FIG. 5, the power drive system 100 in this embodiment mainly differs from the power drive system 100 shown in FIG. 1 in that the intermediate gear 512 and the corresponding drive shaft are canceled, and the intermediate shaft 71 is further simplified in comparison with the embodiment of FIG. 1. The rest is basically the same as the embodiment of FIG. 1, and details are not described herein again.

### Embodiment 3

As shown in FIG. 6, the power drive system 100 in this embodiment mainly differs from the power drive system 100 shown in FIG. 5 in that the intermediate shaft 71 is canceled, and the motor-power-shaft second gear 32 directly meshes with the second-gear driven gear 2b. The rest is basically the same as the embodiment of FIG. 5, and details are not described herein again.

### Embodiment 4

As shown in FIG. 7, the power drive system 100 in this embodiment mainly differs from the power drive system 100 shown in FIG. 6 in that the first motor generator 51 is coaxially connected to the motor power shaft 3, and related gear transmission structures of FIG. 6 are canceled. The rest is basically the same as the embodiment of FIG. 6, and details are not described herein again.

### Embodiment 5 - Embodiment 7:

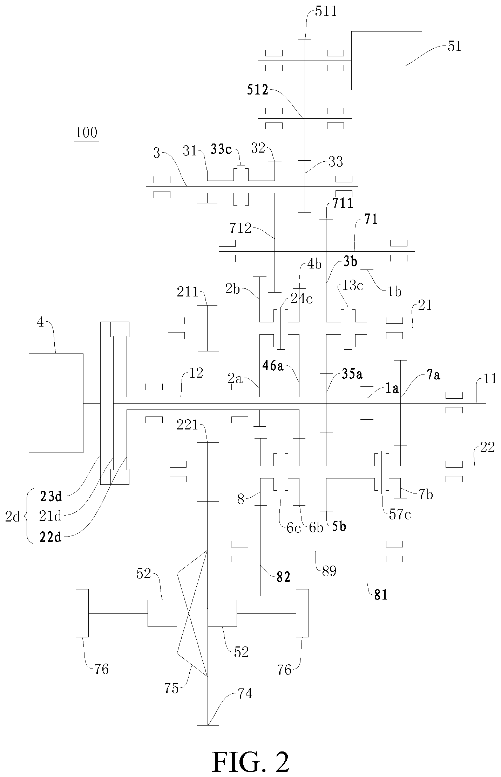

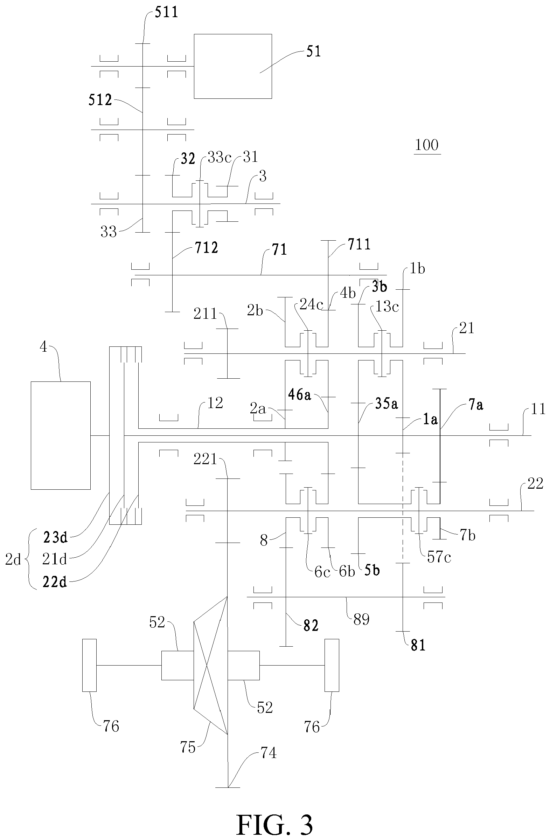

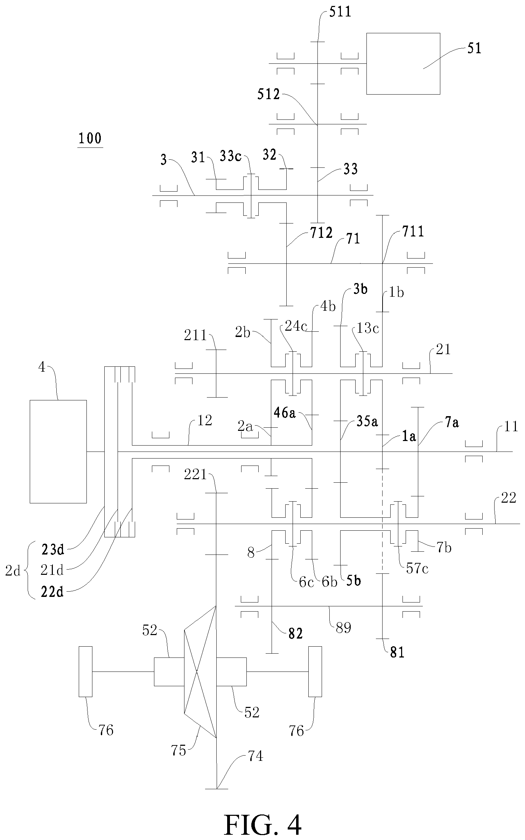

As shown in FIG. 2 to FIG. 4, the power drive system 100 in this embodiment mainly differs from the power drive system 100 shown in FIG. 1 in that the gear driven gears that the first motor generator 51 is connected to are different, and the power of the first motor generator 51 is connected to the third-gear driven gear 3b in FIG. 2, to the fourth-gear driven gear 4b in FIG. 3, and to the first-gear driven gear 1b in FIG. 4.

In addition, the embodiment of FIG. 5 to FIG. 7 only shows that the power of the first motor generator 51 is connected to the second-gear driven gear 2b (the same as FIG. 1), but it can be understood that the embodiment of FIG. 5 to FIG. 7 can also refer to the connection mode of the motor power of FIG. 2 to FIG. 4, that is, the motor power can be connected to the first-gear driven gear 1b, the third-gear driven gear 3b or the fourth-gear driven gear 4b (not shown).

Furthermore, a vehicle including the above power drive system 100 is further provided according to an embodiment of the present disclosure. It should be noted that other components of the vehicle according this embodiment of the present disclosure such as a driving system, a steering system, and a braking system are all existing technologies well known to a person of ordinary skill in the art, and therefore detailed descriptions of such known structures are omitted herein.

In the descriptions of this specification, descriptions of reference terms "one embodiment", "some embodiments", "an example", "a specific example", or "some examples" are intended to indicate that particular features, structures, materials, or characteristics described with reference to the embodiment or example are included in at least one embodiment or example of the present disclosure. In this specification, schematic descriptions of the foregoing terms do not need to aim at a same embodiment or example. Besides, the specific features, the structures, the materials or the characteristics that are described may be combined in a proper manner in any one or more embodiments or examples. Moreover, different embodiments or examples described in the specification can be synthesized and combined by those skilled in the art.

Although the embodiments of the present disclosure are shown and described above, it may be understood that the foregoing embodiments are examples, and cannot be understood as limitations to the present disclosure. A person of ordinary skill in the art may make changes, modifications, replacements, and variations to the foregoing embodiments without departing from the scope of the present disclosure.

## Claims

1. A power drive system, wherein the power drive system has seven forward gears, and the power drive system comprises:
an engine;
a plurality of input shafts, the engine being configured to selectively engage at least one of the plurality of input shafts, and a gear driving gear being arranged on each of the input shafts;
a plurality of output shafts, a gear driven gear being arranged on each of the output shafts, the plurality of gear driven gears correspondingly meshing with the plurality of gear driving gears, a reverse output gear being idly arranged on one of the plurality of output shafts and a reverse-gear synchronizer for engaging with the reverse output gear further being arranged on the output shaft;
a reverse shaft, the reverse shaft being configured to link with one of the plurality of input shafts and the reverse output gear;
a motor power shaft, a motor-power-shaft first gear and a motor-power-shaft second gear being idly arranged on the motor power shaft, and a motor power shaft synchronizer located between the motor-power-shaft first gear and the motor-power-shaft second gear being further arranged on the motor power shaft, wherein the motor-power-shaft second gear is configured to link with one of the gear driven gears; and
a first motor generator, the first motor generator being configured to link with the motor power shaft.

2. The power drive system according to claim 1, wherein
the plurality of input shafts comprises: a first input shaft and a second input shaft, the second input shaft being sleeved on the first input shaft;
the plurality of output shafts comprises: a first output shaft and a second output shaft;
a first-gear driving gear, a third- and fifth-gear driving gear and a seventh-gear driving gear are fixedly arranged on the first input shaft, and a second-gear driving gear and a fourth- and sixth-gear driving gear are fixedly arranged on the second input shaft;
a first-gear driven gear, a second-gear driven gear, a third-gear driven gear and a fourth-gear driven gear are idly arranged on the first output shaft, and a fifth-gear driven gear, a sixth-gear driven gear and a seventh-gear driven gear are idly arranged on the second output shaft;
a first- and third-gear synchronizer is arranged between the first-gear driven gear and the third-gear driven gear, a second- and fourth-gear synchronizer is arranged between the second-gear driven gear and the fourth-gear driven gear, a fifth- and seventh-gear synchronizer is arranged between the fifth-gear driven gear and the seventh-gear driven gear, and a sixth-gear synchronizer is arranged on one side of the sixth-gear driven gear.

3. The power drive system according to claim 2, wherein the reverse output gear is idly mounted on the second output shaft and adjacent to the sixth-gear driven gear, and the reverse output gear and the sixth-gear driven gear share the sixth-gear synchronizer, such that the sixth-gear synchronizer constitutes a reverse-gear synchronizer.

4. The power drive system according to any one of claims 2 and 3, wherein a first-output-shaft output gear is fixedly arranged on the first output shaft, a second-output-shaft output gear is fixedly arranged on the second output shaft, and the first-output-shaft output gear, the second-output-shaft output gear and the motor-power-shaft first gear all mesh with a main reducer driven gear of a vehicle.

5. The power drive system according to claim 2, further comprising a dual clutch, the dual clutch having an input end, a first output end and a second output end, the engine being connected to the input end, the first output end being connected to the first input shaft, and the second output end being connected to the second input shaft.

6. The power drive system according to claim 2, wherein the motor-power-shaft second gear links with one of the first-gear driven gear, the second-gear driven gear, the third-gear driven gear and the fourth-gear driven gear.

7. The power drive system according to claim 1, wherein the reverse output gear shares a gear synchronizer with an adjacent gear driven gear, and the shared gear synchronizer constitutes a reverse-gear synchronizer.

8. The power drive system according to claim 2, wherein distances between the second-gear driving gear, the fourth- and sixth-gear driving gear, the third- and fifth-gear driving gear, the first-gear driving gear as well as the seventh-gear driving gear, and the engine increase progressively.

9. The power drive system according to claim 1, further comprising an intermediate shaft, an intermediate-shaft first gear and an intermediate-shaft second gear being fixedly arranged on the intermediate shaft, the intermediate-shaft first gear meshing with one of the gear driven gears, and the intermediate-shaft second gear meshing with the motor-power-shaft second gear.

10. A vehicle, comprising the power drive system according to any one of claims 1-9.
